# FASCICULE DE BREVET EUROPEEN

(11) **EP 1 547 052 B1**
(45) Date de publication et mention de la délivrance du brevet: **25.11.2009**
(21) Numéro de dépôt: 03755594.3
(22) Date de dépôt: 11.07.2003
(51) Int. Cl.: G09B 23/00, F16B 7/04

(54) **DISPOSITIF D'ASSEMBLAGE DE TUBES**
RÖHRENZUSAMMENBAUEINRICHTUNG
TUBE ASSEMBLING DEVICE

(30) Priorité: 24.07.2002 FR 0209363; 22.04.2003 FR 0304910
(43) Date de publication de la demande: 29.06.2005
(73) Titulaire: Rantrua, Jean, 81630 Montgaillard (FR)
(72) Inventeur: Rantrua, Jean, 81630 Montgaillard (FR)
(86) Numéro de dépôt international: PCT/FR2003/002195
(87) Numéro de publication internationale: WO 2004/012170

(56) Documents cités:
- US-A- 3 554 584
- US-A- 4 020 566

## Description

La présente invention concerne un dispositif d'assemblage de tubes composé de "moyeux" flexibles et de "porte-moyeux" flexibles dans le but de construire des structures bi- ou tridimensionnelles fixes, déformables ou élastiques; telles que décrites dans le document US-A-3 554 584.

Ces structures peuvent être utilisées pour l'enseignement artistique, l'étude et la pratique de la géométrie, de la chimie, de la technologie ou d'autres matières qui sont souvent facilités par la construction de modèles bi- ou tridimensionnelles, ces structures sont aussi utilisables pour la construction de structures utilisables dans l'habitat ou le mobilier et ce en fonction du module ou du matériau utilisé pour les éléments du dispositif.

Les structures tridimensionnelles obtenues sont composées de noeuds et de tubes. Les noeuds de la structure peuvent être simple , c'est-à-dire composés d'un seul "moyeux" ou complexes, c'est-à-dire composés de plusieurs "moyeux" combinés directement ou par l'intermédiaire d'un "porte-moyeux".

Ce dispositif permet :
- de connecter sur un "moyeu" des tubes de diamètres différents, typiquement 25 % en plus ou en moins d'une valeur moyenne définie pour une dimension de "moyeu" ou de "porte-moyeux" ;
- d'obtenir la distance inter-noeud désirée par coupage à la longueur désirée du tube sans aucun aménagement des extrémités de ce tube ;
- d'obtenir une grande diversité dans le nombre des bras issus d'un noeud à partir d'un petit nombre de "moyeux" élémentaires différents ;
- d'obtenir une grande diversité dans l'orientation des bras issus d'un noeud simple ou complexe ;
- de fixer un noeud simple ou complexe à l'extrémité d'un tube.
- de positionner le long d'un tube un noeud qui une fois positionné peut rester mobile sur le tube.
- d'obtenir une cohésion importante entre les éléments de la structure par la possibilité de relier les éléments de la structure par accrochage de liens élastiques ou non sur des parties adaptées des "moyeux" et des "porte-moyeux" .

Sur la partie externe, des "porte-moyeux" peuvent se fixer un ou plusieurs "moyeux", la partie interne du "porte-moyeux" comprend des languettes (1) qui peuvent être introduites dans le tube qui constitue l'axe ou l'enserrer.

Des expansions en forme de crochet (2) sur les pattes de liaisons (10 et 11) des "porte-moyeux" ou sur des languettes divergentes (12) issues de demi anneau antérieur (8) permettent de relier les "porte-moyeux" à d'autres éléments de la structure par des liens (21), préférentiellement élastiques pour modéliser des structures déformables.

Les "moyeux" comportent des branches rayonnées (3) et des anneaux radiaux (4) comportant un "dent" interne (5 et 6 et 7) dirigé vers l'axe du "moyeu", cette "dent" peut être linéaire simple (5) ou en forme d'ancre (6), ou présenter une lumière interne circulaire ou oblongue (7) d'une dimension suffisante au passage d'un tube utilisé pour la structure. Lors de la construction d'une structure les divers éléments : "porte-moyeux", "moyeux" et tubes se combinent les uns avec les autres directement ou indirectement pour permettre un large éventail de possibilités de construction.

Les expansions en forme de "dents" (5 ou 6 ou 7) portés par les anneaux (4) des "moyeux" permettent de d'accrocher des liens (21) reliant divers éléments de la construction, ils permettent aussi le passage d'un tube dans la lumière (20) d'une "dent" ou de plusieurs "dents" (7) portée par les anneaux radiaux (4) des "moyeux" ou dans un ou plusieurs anneaux radiaux (4) eux-mêmes si le diamètre du tube est supérieur au diamètre maximum utilisable dans la lumière de la "dent" (7). Ces expansions (5 ou 6 ou 7) peuvent aussi pénétrer l'extrémité d'un tube en étant légèrement comprimées si elles sont du type en forme d'ancre (6) ou à lumière (7).

Les dessins annexés illustrent l'invention :

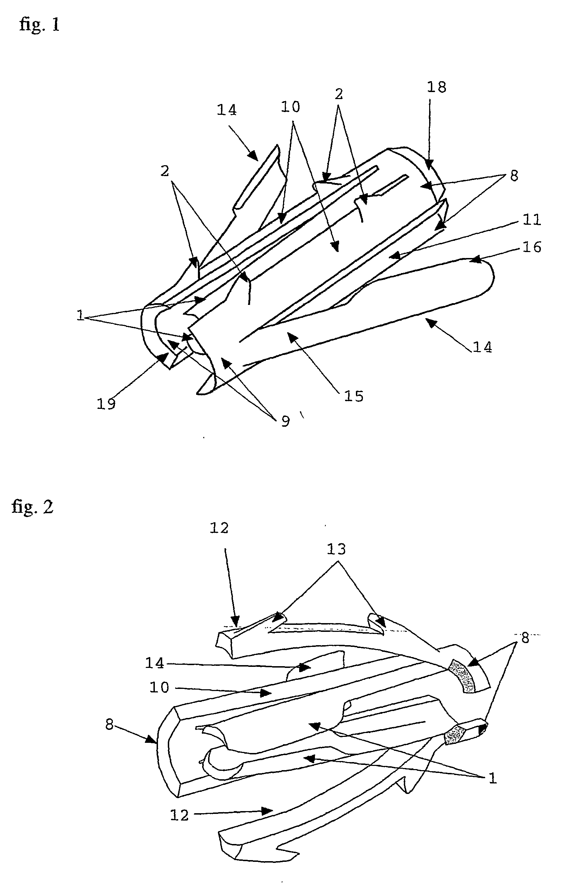

figure 1 : schéma d'un "porte-moyeux" dont les pattes de liaison portent des expansions en forme de crochet.
figure 2 : schéma partiel de la structure interne d'un "porte-moyeux" portant une paire de languettes divergeantes (12) issue des demi anneaux antérieurs.

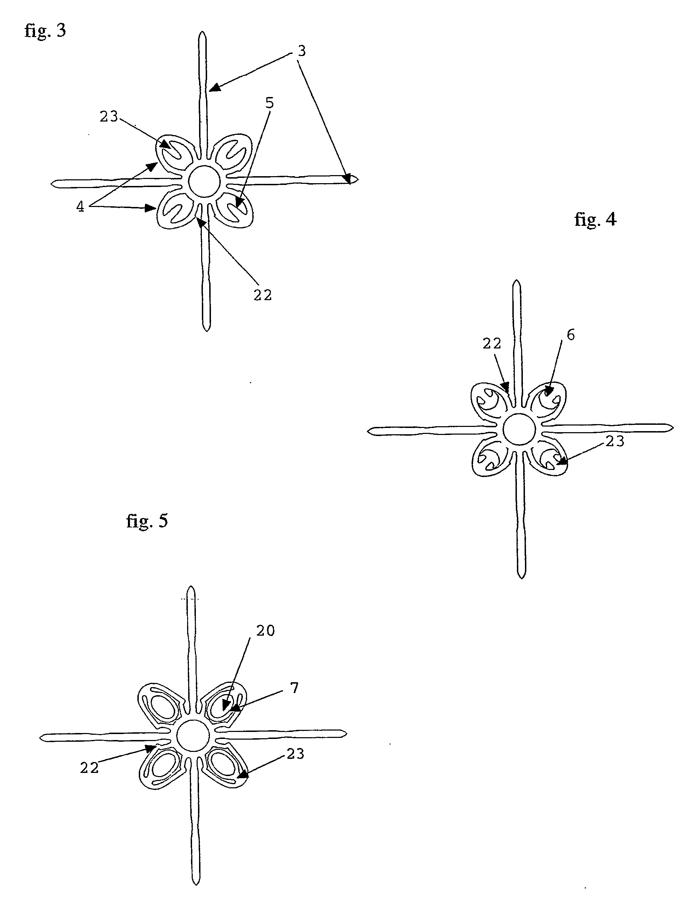

figure 3 : schéma d'un "moyeu" dont les "dents" ont une forme linéaire.
figure 4 : schéma d'un "moyeu" dont les "dents" ont une forme d'ancre.
figure 5 : schéma d'un "moyeu" dont les "dents" présentent une lumière interne.

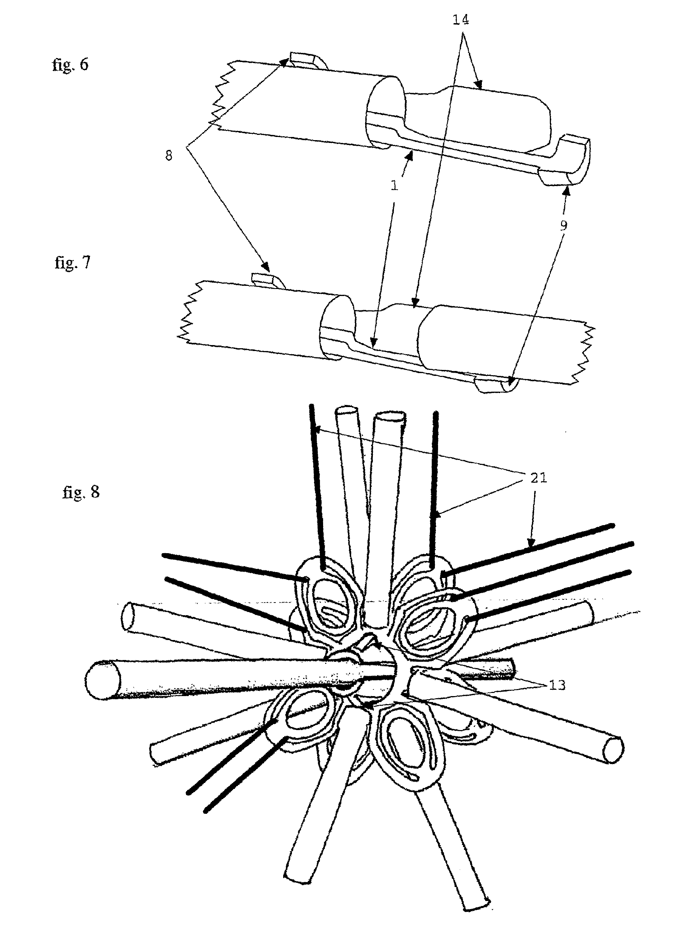

figure 6 : schéma partiel de la partie interne d'un "porte-moyeux" fixé en bout de tube, le tube n'étant pas complètement enfoncé,une des languettes d'origine postérieure (14) et une des languettes d'origine antérieure (1) ne sont pas représentées afin de visualiser les positions des éléments.
figure 7 : schéma partiel de la partie interne d'un "porte-moyeux" reliant deux tubes, les tubes n'étant pas complètement enfoncés, une des languettes d'origine postérieure (14) et une des languettes d'origine antérieure (1) ne sont pas représentées afin de visualiser les positions des éléments.
figure 8 : schéma d'un "porte-moyeux" reliant deux tubes et portant deux moyeux avec représentation de certains liens élastiques.
figure 9 : schéma du pliage d'un "moyeu" dans le cas du passage d'un tube par les anneaux radiaux (4) d'un "moyeu".
figure 10 : schéma montrant le passage d'une paille dans la lumière axiale d'un "moyeu" et à l'intérieur des anneaux (4) radiaux du dit "moyeu".
figure 11 : schéma du pliage d'un "moyeu" selon l'axe de deux languettes (3) opposées.
figure 12 : schéma du pliage d'un "moyeu" selon l'axe de deux anneaux radiaux (4) opposés.
figure 13 : schéma du pliage de deux languettes (3) adjacentes d'un "moyeu".
figure 14 : schéma du pliage dans des directions opposées de deux couples de languettes (3) opposées d'un "moyeu".
figure 15 : schéma montrant la combinaison de deux "moyeux" par pénétration...ou d'un couple d'un "moyeu" dans la lumière axiale d'un autre "moyeu".
figure 16 : schéma montrant la combinaison de deux "moyeux" par pénétration d'un couple d'anneaux radiaux (4) opposés dans les anneaux radiaux (4) d'un autre "moyeu".
figure 17 : schéma d'une structure élémentaire montrant le passage circulaire d'un lien élastique.
figure 18 : schéma d'une structure élémentaire comportant des "moyeux" à trois languettes (3) relié par deux types de liens.

Les "porte-moyeux" sont constitués de quatre demi anneaux (8 et 9) : deux demi anneaux antérieurs (8) et deux demi anneaux postérieurs (9) reliés par 4 pattes de liaison (10 et 11).

Ces pattes (10 et 11) sont grossièrement perpendiculaires à la surface des demi anneaux (8 et 9).

Les demi anneaux antérieurs (8) et postérieurs (9) sont placés en quinconce. Les demi anneaux antérieurs (8) et postérieurs (9) présentent des profils complémentaires convexes (18) et concaves (19), ce qui permet de les disposer de manière stable l'un par rapport à l'autre par pénétration des extrémités complémentaires respectivement concave et convexe.

Les deux pattes de liaison supérieures (10) relient les parties latérales postérieures d'un des demi anneau antérieur (8) aux parties supérieures des demi anneaux postérieurs gauche et droite (9).

Les deux pattes de liaison inférieures (11) relient les parties latérales postérieures de l'autre demi anneau antérieur (8) aux parties inférieures des demi anneaux postérieurs (9) gauche et droite.

Les pattes (10 et 11) sont flexibles et peuvent présenter des expansions radiales souples en forme de crochet (2). Ces expansions fixent le ou les "moyeux" enfilés sur le "porte-moyeux" et permettent d'accrocher des liens élastiques qui peuvent relier les "porte-moyeux" à d'autres éléments de la structure.

Le blocage des "moyeux" peut aussi s'effectuer par l'intermédiaire d'une paire de languettes (12) issue de la partie médiane des demi anneaux antérieurs (8) comportant en dehors de leurs parties médianes des expansions (13) entre lesquelles sont positionnés les "moyeux" lorsqu'ils sont introduits sur un "porte-moyeux".

De la partie postérieure de chaque demi-anneau antérieur (8) est issue une languette (1) convexe vers l'extérieur qui atteint ou dépasse les demi anneaux postérieurs (9) et vient presque rejoindre la languette (1) issue de l'autre demi anneau antérieur (8) au niveau ou après les demi anneaux postérieurs (9).

De la partie postérieure de chaque demi anneau postérieur (9) est issue une languette (14) convexe vers l'extérieur qui atteint ou dépasse les demi anneaux antérieur (8).

Ces languettes (1 et 14) sont rétrécies et épaissies à leur base.

Sur la moitié proximale de sa longueur, chaque languette est étroite (15) puis vers le milieu de son trajet, elle présente une augmentation brusque de sa largeur avec une angulation d'environ 90° puis s'arrondit pour atteindre sa largeur maximale (16), cette zone de la languette (1 et 14) est biseautée vers l'intérieur.

L'extrémité de chacune des languettes (1 et 14) est légèrement rétrécie et biseautée vers l'extérieur de manière à faciliter l'introduction dans les tubes.

La partie la plus large des languettes présentent des bords longitudinaux rectilignes qui peuvent être moins épais que la partie axiale de la languette (1 et 14).

De ces deux paires de languettes, l'une d'origine postérieure (14) et l'autre d'origine antérieure (1), la paire antérieure (1) est interne au "porte-moyeux" et ses extrémités sont convergentes, la paire de languettes d'origine postérieure (14) est externe au "porte-moyeux" lorsque le "porte-moyeux" n'est pas utilisé, mais, en utilisation normale, ces languettes d'origine postérieure (14) sont rabattues à l'intérieur du "porte-moyeux" en écartant les pattes de liaisons (10 et 11) qui une fois les languettes d'origine postérieure (14) passées se referment et empêchent la sortie des languettes d'origine postérieure (14). Dans cette zone, les pattes de liaisons (10 et 11) peuvent être amincies pour permettre un positionnement plus facile des languettes rabattues (14).

Il existe donc, une fois les languettes (14) rabattues, à l'intérieur du "porte-moyeux" deux paires de languettes de direction opposées (1 et 14) décalées de 90° selon un axe antéro-postérieur.

Lors de l'introduction d'un axe dans le "porte-moyeux" si les languettes (1 ou 14) pénètrent l'axe , c'est-à-dire si le "porte-moyeux" est situé à l'extrémité de l'axe) le tube est comprimé entre les languettes (1 ou 14) à l'intérieur qui sont comprimées par le tube et les demi anneaux (8 et 9) et l'autre paire de languettes (1 ou 14) qui se plaquent sur la partie externe du tube, cette pression est augmentée par sous l'effet de la pose d'un "moyeu" sur le "porte-moyeux" .

Si les languettes (1 et 14) restent externes au tube le tube est légèrement comprimé par les demi anneaux (8 et 9) par l'intermédiaire des languettes internes (1 et 14).

Ces "porte-moyeux" permettent aussi de connecter deux tubes entre eux. Pour cela il faut placer un tube de chaque côté du "porte-moyeux" et faire pénétrer le tube introduit dans la partie postérieure par les languettes d'origine antérieures (1) et faire pénétrer le tube introduit dans la partie antérieure par les languettes d'origine postérieure (14).

Chacun des tubes introduits pénètre jusqu'à la zone médiane du "porte-moyeux" , les languettes opposées (1 et 14) se croisent et les parties proximales de chaque couple de languette (1 et 14) se resserrent sous la pression des tubes sur les parties distales de l'autre couple ce qui bloque les tubes. Ce blocage est amélioré si le "porte-moyeux" porte un "moyeu".

La complémentarité des formes, convexe et concave, des demi anneaux antérieurs (8) et postérieurs (9) permet d'emboîter deux sous structures pour constituer un ensemble en équilibre oscillant ou rotatif lorsque deux "porte-moyeux" sont mis face à face.

Les "moyeux" portés par les "porte-moyeux" comportent une partie axiale plane ou conique en forme d'anneau dont la lumière a un diamètre inférieur à la plus grande largeur des anneaux radiaux (4) de ces "moyeux", de cet anneau axial sont issues des expansions radiales en forme de languettes longiformes (3) rétrécies à l'extrémité et dans une partie voisine du milieu de chaque languette (3), ces languettes (3), peuvent présenter dans une partie proche de la jonction avec l'anneau axial (17) un orifice oblong dans lequel une autre languette (3) issue du même "moyeu" ou d'un autre "moyeu" peut être enfilée de manière de manière à modifier la nature du noeud de la structure. Intercalées entre ces expansions (3) et elles aussi rattachée à l'anneau axial, des expansions en forme de crochets ou en anneaux (7) comportant sur leur bord interne une "dent" (5, 6 et 7) dirigée vers l'axe de l'anneau radial (4). Sur la partie médiane latérale de ces expansions (4) existe un ergot (22) arrondi permettant un meilleur blocage des anneaux radiaux (4) quand ils sont introduits dans la lumière axiale d'un "moyeu" ou dans un autre anneau radial (4) lors de la combinaison de plusieurs "moyeux".

Ces "moyeux" sont constitués d'un matériau souple qui permet par flexion du "moyeux" selon différents axes d'obtenir des configurations spatiales différentes des expansions de ces "moyeux" soit par pliage du "moyeu" , soit par pénétration d'un ou plusieurs éléments du "moyeu" dans un ou plusieurs éléments du même "moyeu" ou d'un autre "moyeu" avec lequel il est combiné.

Les languettes radiales (3) pénètrent les tubes de la structure, un tube peut accueillir une languette (3) ou plusieurs languettes (3) d'un "moyeu" ou de différents "moyeux", les languettes (3) peuvent être introduites soit à plat soit repliées pour augmenter la qualité du lien languette tube par pression interne de la languette (3) sur le tube.

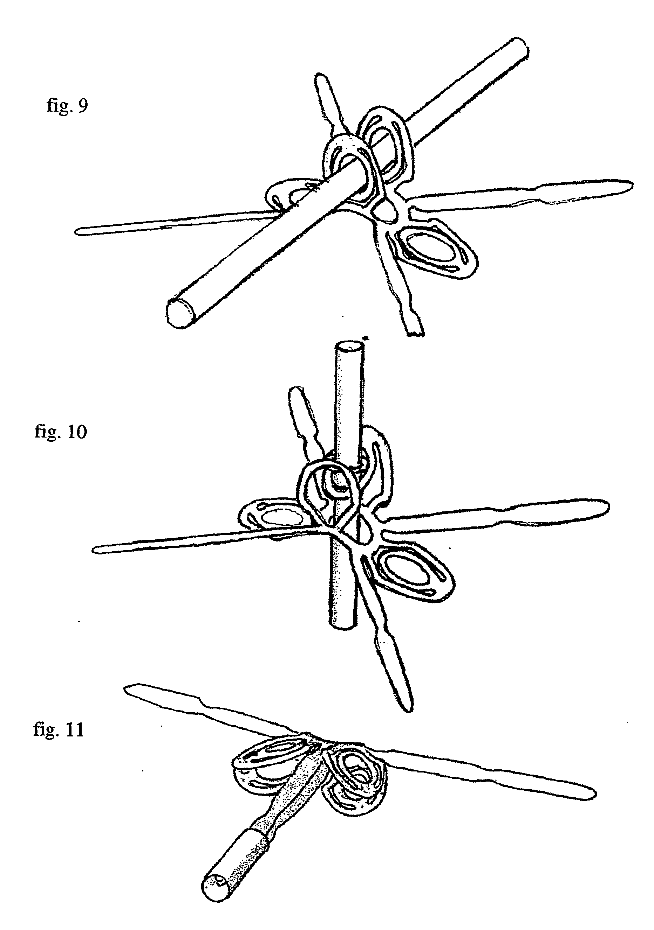

La "dent" (5 et 6 et 7) d'un anneau radial (4) est épaissie ou élargie à sa zone de jonction avec l'anneau radial (4) , cette zone présente des bords latéraux arrondis de manière à ne pas léser le ou les liens qu'elle porte dans certains cas, cette "dent" peut-être soit simple (5) occupant au moins la moitié de la lumière (20) de l'anneau radial (4) soit en forme d'ancre (6) ce qui permet aux liens élastiques qu'elle porte dans certains cas d'avoir des directions de tractions très variées sans que le lien ne puisse se désengager de la "dent" (6) de l'anneau radial (4), soit enfin présenter une lumière oblongue (7) permettant l'accrochage des liens élastiques sur sa zone de jonction avec l'anneau radial (4) mais aussi de rendre possible, lorsqu'un "moyeu" est replié, le passage d'un tube dans cette "dent" à lumière (7) reliée à l'anneau radial (4) par une patte (23). Ce passage d'un tube dans une "dent" en forme d'anneau (7) permet :
- lorsque deux anneaux (4) sont repliés de faire passer un tube parallèlement au plan du "moyeu" (figure 9).
- lorsque le "moyeu" comporte quatre anneau (4), la flexion pliage des anneaux radiaux (4) opposés de chaque côté du plan du "moyeu" permet le croisement de deux tubes dans des directions perpendiculaires de chaque côté du plan du "moyeu".
- lorsque le "moyeu" comporte quatre anneau radiaux (4) la flexion pliage de deux anneaux (4) opposés ajoutée à la "flexion pliage" des "dents" (7) en forme d'anneaux permet le passage et le maintien (figure 10) sur la "dent" (7) d'un anneau (4) d'un tube passant par l'axe du "moyeu" concerné et par les lumières (20) des anneaux radiaux (4).

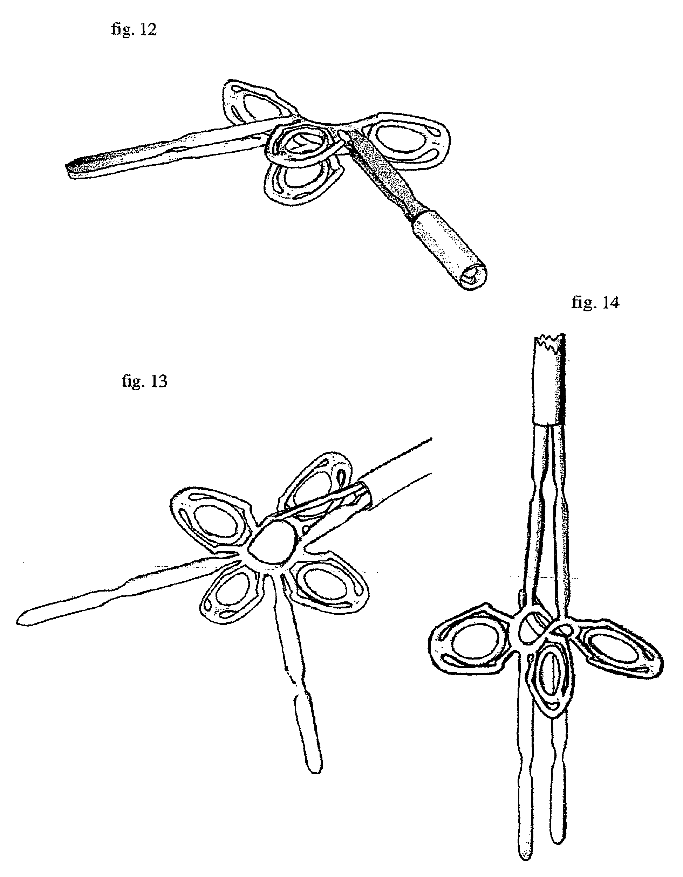

Dans le cas d'un "moyeu" à quatre languettes (3) et quatre anneaux (4) sans que cela soit exhaustif on peut envisager :
- une "flexion pliage" selon l'axe de deux languettes (3) opposées ce qui produit un "moyeu" à trois branches orthogonales (figure 11).
- une "flexion pliage" selon l'axe de deux anneaux (4) radiaux (figure 12) ce qui conduit à la formation d'un "moyeu" comportant deux couples superposés de branches perpendiculaires.
- une "flexion pliage" d'une languette (3) sur la languette (3) voisine (figure 13) donnant lieu à un "moyeu" comportant des branches se dirigeant dans 3 directions seulement au lieu des quatre originales du "moyeu"
- une "flexion pliage" des deux couples de languettes (3) dans des directions opposées (figure 14) ce qui permet si les languettes (3) d'un même couple sont resserrées l'une contre l'autre en déformant l'anneau central du "moyeu" d'obtenir deux couple de languettes (3) opposées sur lesquelles peuvent être introduits deux tubes à connecter. Les "moyeux" simples peuvent aussi lorsqu'ils sont combinés constituer des "moyeux" complexes, il est ainsi possible de combiner sans que cela soit exhaustif :

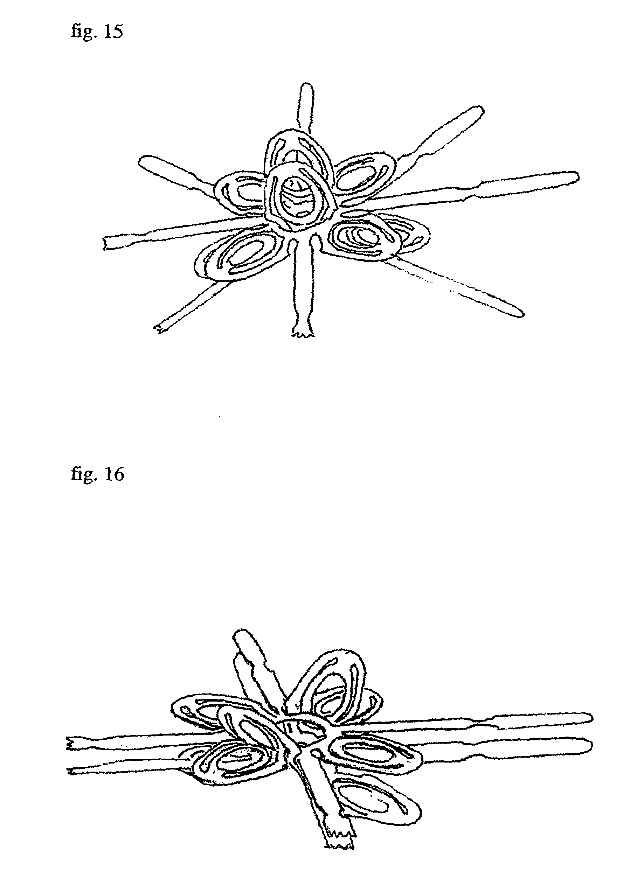

- une flexion de 2 anneaux radiaux (4) opposés d'un même côté de l'anneau axial permet en reserrant 2 "dents" (7) présentant une lumière de vers l'axe du "porte-moyeux" de fixer ce "porte-moyeux" en bout de tube en faisant pénetrer ce tube par les "dents" indiquées plus haut.
- un "moyeu" à un ou plusieurs autres "moyeux" par pénétration d'un ou plusieurs anneaux radiaux (4) dans la lumière axiale d'un autre "moyeux" figure (15) ;
- des "moyeux" entre eux par pénétration de deux anneaux radiaux (4) appartenant à des "moyeux" différents soit par superposition (figure 16) soit par juxtaposition de "moyeux" adjacents ;
- des "moyeux" en faisant pénétrer une ou plusieurs languettes (3) dans l'orifice de la base d'une ou plusieurs languettes (3) de "moyeux" différents.
- des "moyeux" en faisant pénétrer de manière réciproque ou non des languettes (3) radiales dans la lumière axiale d'un autre "moyeu".

Ces modes de combinaison des éléments ne sont pas limitatifs et peuvent se combiner entre eux ce qui augmente encore le nombre de structures possibles.

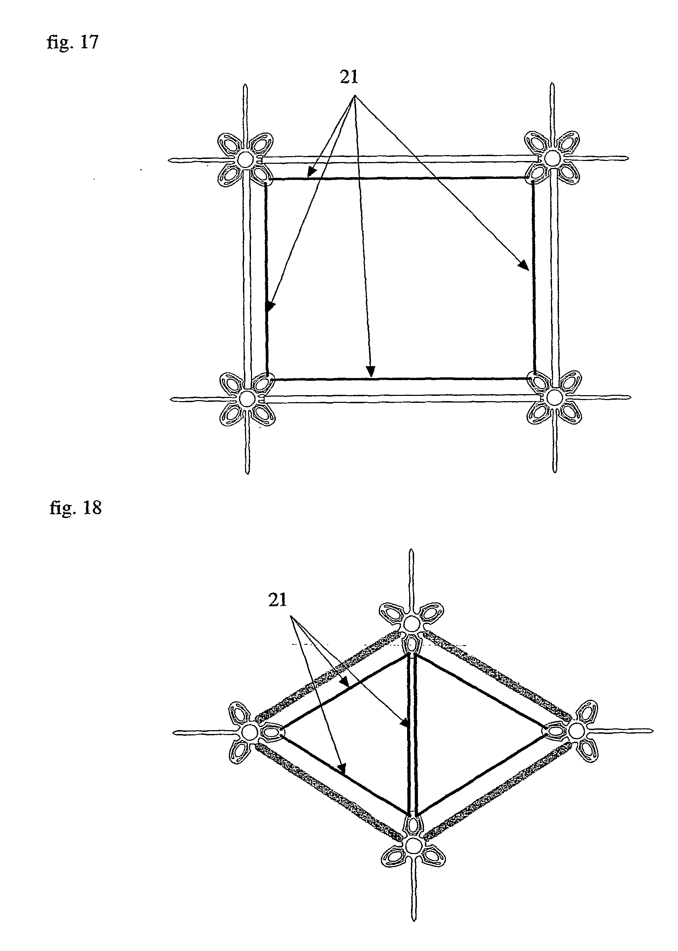

Les liens utilisés (21) peuvent relier des "porte-moyeux" ou des moyeux, ils sont préférentiellement élastiques et relient soit des éléments voisins (figure 17 et 18) par exemple les sommets d'un polygone appartenant à la structure soit des éléments distants.

Dans le cas ou les anneaux radiaux (4) portent des "dents" (7) présentant une lumière (20) la zone de jonction (23) entre cette "dent" (7) et l'anneau radial (4) peut présenter des bords épaissis et une partie axiale amincie de manière à permettre le pliage de l'anneau radial (4) selon l'axe de l'amincissement de cette patte (23) de manière à rendre plus facile la pénétration d'un anneau radial (4) dans un des tubes constituant la structure bi ou tridimensionnelle.

## Revendications

1. Dispositif d'assemblage de tubes composé de "moyeux" et de "porte-moyeux" souples adaptables à des tubes de diamètres variés permettant d'assembler des tubes bruts, ce qui permet de couper ces tubes à la longueur désirée et de les utiliser directement sans aménagement des extrémités, dans le but de construire des structures bi-- ou tridimensionnelles rigides ou élastiques utilisables dans l'enseignement, l'étude et la pratique de la géométrie, de la chimie ou d'autres matières, les dits enseignements étant souvent facilités par la construction de modèles bi-- ou tridimensionnels ainsi que dans la construction d'éléments structuraux utilisables dans d'autres domaines , **caractérisé en ce que** les dits "moyeux" comportent une partie axiale conique ou plane comportant un orifice central autour duquel sont disposées des languettes souples (3) rétrécies dans leur partie médiane et des anneaux radiaux (4) présentant une "dent" (5 et 6 et 7) dirigée vers l'axe du "moyeux", de sorte que les dites languettes souples (3) puissent être introduites dans les tubes, à plat ou repliées au niveau de la zone rétrécie, et que les liens (21) de la structure puissent s'accrocher à la base des "dents" (5 ou 6 ou 7) des anneaux radiaux (4), et **en ce que** les dits "porte-moyeux" souples dans lesquels peuvent être fixés des tubes à assembler et sur lesquels peuvent être fixés des "moyeux" comportent des expansions externes radiales en forme de crochets (2) et reliés par 4 pattes de liaison (10 et 11) et décalées de 90 selon un axe antéro-postérieur,2 paires de demi anneaux , une paire postérieure de demi anneaux (9) et une paire antérieure de demi anneaux (8) d'où sont issues au moins une paire de languettes (1) se dirigeant vers le couple de demi anneaux (9) opposés à sa base de sorte que lorsqu'un tube à assembler est introduit dans le "porte-moyeux" soit toutes languettes (1 et 14) restent extérieures et le positionnement se fait tout au long du tube, le tube étant légèrement pressé entre les languettes (1 et 14), soit certaines languettes (1 ou 14) pénètrent le tube et la fixation se fait en bout de tube.

2. Dispositif selon la revendication 1 **caractérisé en ce que** les 4 pattes de liaison (10 et 11) comportent des expansions radiales souples en forme de crochet (2) qui permettent d'accrocher des liens élastiques (21), qui peuvent relier divers éléments de la structure , et de bloquer le ou les "moyeux" qui peuvent être enfilés sur le "porte-moyeux" de sorte que lorsqu'un "moyeux" est enfilé sur le "porte-moyeux", la pression des "moyeux" permet lorsque le "porte-moyeux" est positionné le long du tube, c'est-à-dire quand les languettes (1 et 14) restent extérieures au tube, d'augmenter la pression des languettes (1 et 14) sur le tube, et que lorsque les languettes (1 ou 14) pénètrent le tube, c'est-à-dire lorsque le "porte-moyeux" est positionné à l'extrémité d'un tube, ledit tube est comprimé entre les languettes (1 ou 14) à l'intérieur du tube et les demi anneaux (8 et 9) à l'extérieur du tube.

3. Dispositif selon la revendication 1 **caractérisé en ce** des languettes divergentes (12) sont issues des demi anneaux antérieurs (8) et comportent des expansions (13) en avant et en arrière d'une partie médiane entre lesquelles se fixent les "moyeux" introduits sur le "porte-moyeux".

4. Dispositif selon la revendication 1 **caractérisé en ce que** les languettes (1) issues des demi anneaux antérieurs (8) convergent vers l'axe du "porte-moyeux" en se dirigeant vers la partie postérieure du "porte-moyeux".

5. Dispositif selon la revendication 1 **caractérisé en ce que** les "porte-moyeux" comportent une paire de languettes (14) issues des demi anneaux postérieurs (9) qui divergent en se dirigeant vers les demi anneaux antérieurs (8), les dites languettes (14) ont une largeur maximale supérieure à l'espace laissé libre entre les pattes de liaison. de manière à être bloquées à l'intérieur du "porte-moyeux" lorsqu'elles y sont rabattues.

6. Dispositif selon la revendication 5 **caractérisé en ce que** les pattes de liaisons (10 et 11) comportent un amincissement dans la zone où se trouve la deuxième paire de languettes (14) lorsqu'elle est rabattue à l'intérieur du "porte-moyeux".

7. Dispositif selon les revendications 4 et 5 **caractérisé en ce que** les languettes (1 et 14) des "porte-moyeux" comportent une moitié proximale étroite (15) puis s'élargissent dans leur partie moyenne et s'arrondissent en atteignant leur largeur maximale (16) de sorte que lorsque des tubes sont introduits par les deux extrémités d'un "porte-moyeux" , les languettes (1) issues des demi anneaux antérieurs (8) pénètrent le tube introduit par la partie postérieure du "porte-moyeux" et les languettes (14) issues des demi anneaux postérieurs (9) pénètrent le tube introduit par la partie antérieure des "porte-moyeux", ce faisant les deux couples de languettes (1 et 14) se croisent et les parties proximales de chaque couple se referment sur les parties distales de l'autre couple ce qui permet la connexion de deux tubes par leurs extrémités.

8. Dispositif selon la revendication 1 **caractérisé en ce que** les pattes de liaisons supérieures (10) relient les deux parties latérales postérieures d'un demi anneau antérieur (8) aux parties supérieures des demi anneaux postérieurs (9) droit et gauche et **en ce que** les pattes de liaison inférieures (11) relient les parties latérales postérieures de l'autre demi anneau antérieur (8) aux parties inférieures des demi anneaux postérieurs (9) droit et gauche.

9. Dispositif selon la revendication 1 **caractérisé en ce que** les "dents" des anneaux radiaux (4) des "porte-moyeux" ont une forme d'ancre (6) de sorte que la traction des liens (21) puisse être dirigée dans des directions très différentes sans que les liens (21) ne se désengagent de la "dent" (6).

10. Dispositif selon la revendication 1 **caractérisé en ce que** la "dent" (7) des anneaux radiaux (4) des "moyeux" possède une lumière interne (20) d'un diamètre suffisant pour laisser le passage à un tube utilisé pour la construction.

11. Dispositif selon la revendication 1 **caractérisé en ce que** les anneaux radiaux (4) présentent des ergots externes (22) de manières à bloquer les anneaux radiaux (4) lorsqu'ils sont introduits dans la lumière axiale d'un "moyeux" ou dans un autre anneau radial (4).

12. Dispositif selon la revendication 1 **caractérisé en ce que** la zone de jonction entre un anneau radial (4) et la "dent" interne (5 ou 6 ou 7) à l'anneau radial (4) est élargie ou épaissie, au moins sur le bord, de manière à éviter le retournement de cette "dent" sous la traction des liens (21).

13. Dispositif selon la revendication 1 **caractérisé en ce que** la zone de jonction (23) entre la "dent" interne (5 ou 6 ou 7) des anneaux radiaux (4) et l'anneau axial présente un profil arrondi de manière à ne pas léser les liens qu'elle porte.

14. Dispositif selon la revendication 1 **caractérisé en ce que** les faces extérieures (18 et 19) des demi anneaux antérieurs (8) et postérieurs (9) présentent des profils complémentaires, convexes et concaves, de sorte que deux "porte-moyeux" puissent former une structure en équilibre oscillant ou rotatif après mise face à face des parties complémentaires de deux "porte-moyeux".

15. Dispositif selon la revendication 1 **caractérisé en ce que** les languettes (1 et 14) des "porte-moyeux" ont une extrémité légèrement rétrécie et biseautée vers l'extérieur de manière à faciliter l'introduction de ces languettes (1 et 14).

16. Dispositif selon la revendication 1 **caractérisé en ce que** les languettes (3) des "moyeux" comportent une lumière de forme oblongue à leur base de sorte qu'une autre languette (3) puisse y pénétrer et y rester bloquer.

17. Dispositif selon la revendication 1 **caractérisé en ce que** les anneaux radiaux (4) peuvent présenter au voisinage de l'anneau central une patte qui relie les deux cotés de l'anneau radial (4) et permet lorsque 2 "moyeux"" sont combinés de faire pénétrer une languette (3) dans l'orifice délimité par cette patte et l'anneau central du moyeu.

18. Dispositif selon la revendication 1 **caractérisé en ce que** les pattes de liaisons (23) qui relient une "dent" (7) d'un anneau radial à l'anneau radial (4) présentent sur au moins une face une gorge axiale qui permet en augmentant la flexibilité de cette dent (7) de faire pénétrer un anneau radial (4) et sa "dent" (7) à l'intérieur d'un tube de la structure.

## Claims

1. A tube assembling device comprising plural flexible "hubs" and plural "hubs-carrier" , said "hubs" and "hubs-carrier" being connectable to tubes of various diameter to be assembled, said tubes are rough tubes and can be cut at the desired length and used directly without modification of the extremities, with the aim of building rigid or elastic bi-dimensional or three-dimensional structures, said structures can be used in the teaching, study and practice of geometry, chemistry or other subjects,said teachings are often facilitated by the construction of bi-dimensional or three-dimensional models and in the construction of structural elements used in other areas, **characterized in that** said "hubs" comprise a plane or conical axial part with a hole in a middle thereof around witch are arranged flexibles tongues (3) having a narrow part in a middle of their length and radial rings (4) having "teeth" (5 and 6 and 7), said "teeth" being directed toward the center of the hub, so that said flexible tongues (3) can be introduced into the tubes, flat or folded in the narrowed area, .and that links (21) of a structure to be assembled are fixable at the base of said teeth (5 and 6 and 7) of radial rings (4), and that the so-called flexible "hubs-carriers" in which tubes may be fixed and on which "hubs" can be fixed comprise external radial hook-shaped expansions (2) and, connected by four connecting lugs (10 and 11) shifted 90 degrees according to an anterior-posterior axis, two pairs of half rings: a posterior pair of half rings (9) and an anterior pair of half rings (8) from which is issued at least one pair of tongues (1) heading to the other of the pair of half rings (9) so that when a tube is inserted into the hubs-carrier, either said all tongues (1 and 14) remain outside the tube and positioning of said hubs-carrier is made all along the tube, which is slightly compressed between the pair of tongues (1 and 14), or some tongue (1 or 14) of said pair of tongues is inserted inside the tube and positioning of the hubs-carrier occurs at an end of the tube.

2. Device according to claim 1 **characterized in that** four connecting lugs (10 and 11) include flexible hook-shaped radial expansions for fixing elastic links, which may bind different structural elements to be assembled and which may lock one or several said hubs that are fixable on the hubs-carrier, so that when a "hub" is put on a "hubs-carrier" the pressure of the hub allows when the "hubs-carrier" is positioned along a tube ie when the tabs (1 and 14) remain outside the tube to increase tongues (1 and 14) pressure on the tube and when the tongues (1 or 14) enter the tube, ie when the "carrier hub" is positioned at one end of the tube, the tube is compressed between the tongues (1 or 14 ) inside the tube and outside the tube by the half rings (8).

3. Device according to claim 1 wherein the divergent tongues (12) are issued from the anterior half rings (8) and include expansions (13) in front and back of a middle part between which the "hubs" inserted on the "hubs-carrier" stay positioned.

4. Device according to claim 1 wherein the tongues (1) from the anterior half rings (8) converge towards the axis of the "hubs-carrier" and extend towards the posterior part of said "hubs-carrier".

5. Device according to claim 1 wherein "hubs-carriers" include a pair of divergent tongues (14) issued from the posterior half rings (9) heading towards the anterior half rings (8), the said tongues (14) have a maximum width greater than the space between the connecting lugs to be blocked in the "hubs-carrier" if they are pushed inside a said "hubs-carrier".

6. Device according to claim 5 wherein the connecting lugs (10 and 11) have an inferior thickness in the area where the second pair of tongues is located when pushed inside said "hubs-carrier".

7. Device according to claims 4 and 5 **characterized in that** the tongues (1 and 14) of a "hubs-carrier" have a narrow proximal half part (15), then widening in their middle part to reach a maximal width (16) where they become rounded, so that when tubes are inserted from both ends of a hubs-carrier, the tongues (1) extending from the anterior half rings (8), come into a tube inserted through the posterior part of a "hubs-carrier" and the tongues (14) extending from said posterior pair of half rings (9) come into a tube inserted through the anterior part of the "hubs-carrier", so that the two pairs of tongues (1 and 14) cross each other and the proximal part of each pair close on the distal parts of the other pair of said tongues which enables two tubes to be connected by their ends.

8. Device according to claim 1 **characterized in that** the two superior connecting lugs (10) link lateral posterior parts of one said anterior half ring (8) to upper parts of left and right of posterior half rings (9) and that the two inferior connecting lugs (11) link lateral posterior parts of the other said anterior half ring (8) to lower parts of left and right posterior half rings.

9. Device according to claim 1 wherein "teeth" of radial rings (4) of hubs-carrier are anchor-shaped (6) so that a pulling force of the links (21) to be assembled may be aimed towards many different directions without links getting loose from said "teeth".

10. Device according to claim 1 wherein said catching teeth (7) of radial rings (4) are perforated by a hole having a diameter that is large enough to allow insertion of a tube used for building the structure.

11. Device according to claim 1 wherein the radial rings (4) have external prominent zones (22) to lock the radial rings (4) when inserted into the axial hole of said hub or when inserted into a radial ring (4) of another hub.

12. Device according to claim 1 wherein the junction point between a radial ring (4) and the internal "tooth" (5 or 6 or 7) of the radial ring (4) is enlarged or thickened, at least on the edge, so as to prevent said tooth from turning inside out under a pulling force of one of the links (21).

13. Device according to claim 1 wherein the junction area (23) between the internal "tooth" (5 or 6 or 7) of radial rings (4) and axial ring has a rounded profile in order not to damage any links to be assembled therein.

14. Device according to claim 1 wherein the external faces (18 and 19) of the anterior half rings (8) and posterior half rings (9) have complementary convex and concave shapes, so that two "hubs-carrier" may be connected to form an oscillatable or rotatable balanced structure when placing complementary sides of two different "hubs-carrier" face to face.

15. Device according to claim 1 wherein tongues (1 and 14) have a slightly narrower end part that is bevel edged towards the outside to ease insertion of at least one pair of tongues (1 and 14).

16. Device according to claim 1 wherein flexible tongues (3) of "hubs" have an elongated hole at their bases so that another flexible tongues may be inserted into said hole and remain fixed.

17. Device according to claim 1 **characterized in that** the radial rings (4) present in an area close to the central ring, a lug that connects the two sides of the radial ring (4) and allows when 2 "hubs" are combined to enter a tongue (3) into the hole formed by the said lug and the axial ring of the "hub".

18. Device according to claim 1 **characterized in that** the connecting portion (23) linking a "tooth" (7) of a radial ring (4) to the said radial ring (4) present at least on one side a narrow axial depressed zone to increase the flexibility of the said "tooth" enabling the insertion of the "tooth" (7) and of the connected radial ring into a tube of the structure to be assembled.

## Patentansprüche

1. Vorrichtung für das Zusammenfügen von Rohren bestehend aus flexiblen "Naben" und "Nabenträgern" anpassbar an Rohre verschiedener Durchmesser was erlaubt einfache Rohre zusammenzufügen, womit diese Rohre in beliebbarer Länge abgeschnitten werden können und direkt ohne Bearbeitung der Rohrenden verwendet werden können, mit der Absicht zwei- oder dreidimensionale starre oder elastische Strukturen zu erstellen, die im Unterricht, Studium und Praxis der Geometrie, Chimie oder anderen Fächern verwendet werden können, wobei die besagten Unterrichte oft von der Konstruktion von zwei- oder dreidimensionalen Modellen erleichtert werden, was auch für das Erstellen von Strukturelementen gilt, die in anderen Bereichen verwendbar sind, charakterisiert indem die besagten "Naben" einen axialen konischen oder geraden Bestandteil vorweisen mit einer zentralen Öffnung, um die flexible Laschen(3), die sich im mittleren Teil verängern angeordnet sind und Radial- Ringe(4) mit einem "Zahn" (5 und 6 und 7) der in Richtung der Nabenachse zeigt, so dass die besagten flexiblen Laschen in die Rohre eingefügt werden können, flach oder umgebogen an der dünneren Stelle im Mittelbereich der Lasche, und dass die Verbindungsstücke (21) der Struktur sich an der Basis der "Zähne" (5 und 6 und 7) der Radial-Ringe(4) befestigen können, und indem die besagten flexiblen "Nabenträger" in die Rohre, welche zusammengefügt werden sollen, befestigt werden können, und auf welche "Naben" befestigt werden können, die radiale externe Erweiterungen in Form von Haken besitzen (2) und durch 4 Bindeglieder(10 und 11) verbunden sind und um 90 Grad auf der Längsachse versetzt sind, 2 Paar Halbringe: ein hinteres Paar von Halbringen (9) und ein vorderes Paar von Halbringen (8) aus denen mindestens ein Paar Laschen hervorgeht(1) in Richtung des Paars von Halbringen(9) der Basis gegenüberliegend, so dass wenn ein zu montierendes Rohr in den Nabenträger eingeführt wird entweder alle Laschen (1 und 14) aussen bleiben und die Positionierung entlängs des Rohres erfolgt, wobei das Rohr leicht gedrückt wird zwischen den Laschen(1 und 14), oder einige Laschen(1 und 14) gehen in das Rohr und die Fixierung erfolgt am Rohrende.

2. Vorrichtung nach Anspruch 1 charakterisiert **dadurch**, dass die 4 Bindeglieder(10 und 11) flexible radiale Erweiterungen in Form von Haken (2) besitzen, an die die elastischen Verbindungsstücke (21) angehängt werden können, die verschiedene Teile der Struktur verbinden können, und an denen die Nabe(n) verankert werden können, die auf den Nabenträger gesteckt werden können, so dass wenn eine "Nabe" auf einen "Nabenträger" gesteckt wird, der Druck der "Naben" ermöglicht wenn der "Nabenträger" längs des Rohres positionniert ist, d.H. wenn die Laschen (1 und 14) ausserhalb des Rohres bleiben, den Druck der Laschen(1 und 14) auf das Rohr zu erhöhen, und wenn die Laschen(1 und 14) sich im Rohr befinden, d.h. wenn der "Nabenträger" am Rohrende positionniert ist, wird besagtes Rohr zwischen den Laschen (1 und 14) im Rohr und den Halbringen (8 und 9) und ausserhalb des Rohres gepresst.

3. Vorrichtung nach Anspruch 1 charakterisiert **dadurch**, dass ausseinanderlaufende Laschen (12) aus den hinteren Halbringen(8) hervorgehen und Erweiterungen(13) vorweisen vorne und hinten am medianen Abschnitt zwischen denen die an die "Nabenträger" gesteckten "Naben" befestigt werden.

4. Vorrichtung nach Anspruch 1 charakterisiert **dadurch**, dass die Laschen(1) die aus den hinteren Halbringen(8) hervorgehen auf die Achse des "Nabenträgers" konvergieren und dabei auf den hinteren Teil des "Nabenträgers" hinlaufen.

5. Vorrichtung nach Anspruch 1 charakterisiert **dadurch**, dass die "Nabenträger" ein Paar Laschen (14) vorweisen, die aus den hinteren Halbringen (9)hervorgehen, die auseinanderlaufen auf die vorderen Halbringe(8) hinweisend, die besagten Laschen (14) besitzen eine maximale Breite die grösser ist, als der Freiraum zwischen den Bindegliedern so daß sie wenn sie umgeschagen sind im Inneren des "Nabenträgers" befestigt werden können.

6. Vorrichtung nach Anspruch 5 charakterisiert **dadurch**, dass die Bindeglieder (10 und 11) eine Verschmälerung vorweisen in dem Bereich, wo sich das zweite Paar Laschen befindet (14) wenn es umgeschlagen ist ins Innere des "Nabenträgers".

7. Vorrichtung nach Anspruch 4 und 5 charakterisiert **dadurch**, dass die Laschen (1 und 14) der "Nabenträger" eine schmale proximale Hälfte (15) vorweisen und dann im mittleren Teil breiter werden und in der Rundung ihre maximale Breite (16) erreichen, so dass wenn die Rohre eingefügt werden an den beiden Enden eines "Nabenträgers", die Laschen(1) aus den vorderen Halbringen(8) in das eingeführte Rohr durch den hinteren Teil des "Nabenträgers" gelangen und die Laschen(14) aus den hinteren Halbringen (9) gelangen in das eingeführte Rohr durch den vorderen Teil des "Nabenträgers", wodurch sich die beiden Laschenpaare (1 und 14) kreuzen und die proximalen Teile beider Paare überlappen sich mit den distalen Teilen des anderen Paars was den Zusammenschluss zweier Rohre durch ihre Enden ermöglicht.

8. Vorrichtung nach Anspruch 1 charakterisiert **dadurch**, dass die oberen Bindeglieder (10) die beiden lateralen hinteren Teile eines vorderen Halbrings (8) mit den oberen Teilen eines hinteren Halbrings(9) verbinden, rechts und links und **dadurch** dass die unteren Bindeglieder(11) die lateralen hinteren Teile des anderen vorderen Halbrings (8) mit den unteren Teilen des hintren Halbrings (9) recht und links verbinden.

9. Vorrichtung nach Anspruch 1 charakterisiert **dadurch**, dass die "Zähne" der Radial Ringe (4) der "Nabenträger" eine Ankerform (6) vorweisen, so dass die Zugkraft der Verbindugsstücke (21) in ganz verschiedene Richtungen geleitet werden kann ohne dass die Verbindugsstücke (21) sich aus dem "Zahn" (6) lösen.

10. ) Vorrichtung nach Anspruch 1 charakterisiert **dadurch**, dass der "Zahn" (7) der Radial Ringe (4) der "Naben" eine innere Öffnung (20) vorweist mit einem genügend grossen Durchmesser um ein für die Konstuktion benötigtes Rohr durchzulassen.

11. Vorrichtung nach Anspruch 1 charakterisiert **dadurch**, dass die Radial Ringe (4) äussere Noppen (22) vorweisen, um die Radial Ringe (4) festzuklemmen wenn sie in die axiale Öffnung einer "Nabe" eingeführt werden oder in einen anderen Radial Ring (4).

12. Vorrichtung nach Anspruch 1 charakterisiert **dadurch**, dass die Verbindugszone zwischen einem Radial Ring (4) und einem internen "Zahn" (5 oder 6 oder 7) zum Radial Ring (4) erweitert oder verdickt ist, zu mindest am Rand, so dass ein Umbiegen dieses "Zahns" vermieden wird unter der Zugbelastung der Verbindugsstücke (21).

13. Vorrichtung nach Anspruch 1 charakterisiert **dadurch**, dass die Verbindugszone (23) zwischen dem internen "Zahn" (5 oder 6 oder 7) der Radial Ringe (4) und dem Axial Ring ein abgerundetes Profil vorweist um die Verbindugsstücke die sie trägt nicht zu beschädigen.

14. Vorrichtung nach Anspruch 1 charakterisiert **dadurch**, dass die Aussenflächen (18 und 19) der vorderen (8) und hinteren (9) Halbringe komplementäre konvexe und konkave Profile vorweisen, so dass zwei "Nabenträger" eine ausgewogene schwingende oder rotative Struktur formen können nach Gegenüberstellen der komplementären Seiten der beiden "Nabenträger".

15. Vorrichtung nach Anspruch 1 charakterisiert **dadurch**, dass die Laschen (1 und 14) der "Nabenträger" ein leicht spitz nach aussen zulaufendes Ende vorweisen um das Einführen dieser Laschen (1 und 14) zu erleichtern.

16. Vorrichtung nach Anspruch 1 charakterisiert **dadurch**, dass die Laschen (3) der "Naben" eine längliche Öffnung vorweisen an ihrer Basis so dass eine andere Lasche (3) dort eingeführt werden kann und dort stecken bleibt.

17. Vorrichtung nach Anspruch 1 charakterisiert **dadurch**, dass die Radial Ringe (4) in der Nähe des Zentral Rings eine Passe vorweisen können, die die beiden Seiten des Radial Rings(4) mit einander verbindet und ermöglicht wenn zwei "Naben" kombiniert sind eine Lasche (3) in die durch die Passe und den Zentral Ring der Nabe limitierte Öffnung zu schieben.

18. Vorrichtung nach Anspruch 1 charakterisiert **dadurch**, dass die Bindeglieder (23), die einen "Zahn" (7) eines Radialringes mit dem Radialring (4) verbinden auf mindestens einer Seite eine Axiale Vertiefung vorweisen, welche es ermöglicht indem die Flexibilität des "Zahnes" (7) erhöht wird, einen Radial Ring (4) und seinen "Zahn" (7) einzuführen in einem Rohr der Struktur.
